# EUROPÄISCHE PATENTSCHRIFT

(11) **EP 0 833 072 B1**
(45) Veröffentlichungstag und Bekanntmachung des Hinweises auf die Patenterteilung: **10.04.2002**
(21) Anmeldenummer: 97110997.0
(22) Anmeldetag: 02.07.1997
(51) Int. Cl.: F16D 69/02, B01J 2/10

(54) **Verfahren und Anlage zur lösungsmittelfreien Herstellung von Agglomeraten aus harzgebundenem Feststoff**
Process and device for solvent-free preparation of resin bonded agglomerates
Procédé et installation pour la préparation sans solvant des agglomérats à liants résineux

(30) Priorität: 28.09.1996 DE 19640175
(43) Veröffentlichungstag der Anmeldung: 01.04.1998
(73) Patentinhaber: DRAISWERKE GmbH, D-68305 Mannheim (DE); RÜTGERS Automotive AG, 45356 Essen (DE)
(72) Erfinder: Uhrig, Richard, 68642 Bürstadt (DE); Pfaff, Hans, 76297 Stutensee (DE); Wetzel,Hans, 68307 Mannheim (DE); Wriedt, Bernd, 48249 Dülmen (DE); Malburg, Frank, 48734 Reken (DE)
(74) Vertreter: Rau, Manfred, Dr. Dipl.-Ing.

(56) Entgegenhaltungen:
- EP-A- 0 594 172
- EP-A- 0 696 692
- DE-B- 1 156 388
- GB-A- 349 007
- US-A- 4 246 220

## Beschreibung

Die Erfindung betrifft ein Verfahren zur lösungsmittelfreien Herstellung von Agglomeraten aus mittels Harz gebundenem fasrigem und/oder pulverförmigem Feststoff und eine Anlage zur Durchführung des Verfahrens.

Reibbelagmassen bestehen beispielsweise aus Calciumcarbonat als Reibmittel, Metallpulver und Fasern, z. B. aus Aramid, für die mechanische Bindung der Massen und Phenolharz als Bindemittel. Der vorgemischten Masse wird Lösungsmittel zugegeben, welches das Phenolharz anlöst und zu einer Agglomeratbildung führt. Die Agglomeratbildung ist wichtig für die Weiterverarbeitung der Masse, um eine Separierung, d. h. eine Entmischung, zu vermeiden. Es ist bekannt, diese Reibbelagmassen in Z-Knetern aufzubereiten, wobei die Füllstoffe und Fasern zerteilt und vereinzelt werden und wobei das Lösungsmittel zum Anlösen des Phynolharzes in die Masse eingearbeitet wird. Anschließend wird das Lösungsmittel in statischen Trockenöfen mittels Warmluft ausgetrieben und teilweise zurückgewonnen. Es ist auch bereits bekannt, diese Massen auch auf sogenannten Mischtrocknern aufzubereiten, wobei dort das Lösungsmittel meist unter Vakuum entfernt wird.

Der Erfindung liegt die Aufgabe zugrunde, ein Verfahren zur lösungsmittelfreien Herstellung der gattungsgemäßen Agglomeraten zu schaffen und eine Anlage zur Durchführung dieses Verfahrens anzugeben.

Die Aufgabe wird erfindungsgemäß durch die Merkmale des Anspruches 1 gelöst. Der Kern der Erfindung ist, daß Wasser als Wärmeträger zum Anschmelzen des Harzes verwendet wird, indem das Wasser verdampft wird und seine Verdampfungswärme anschließend durch Kondensation an den Feststoff und das Harz abgibt, wodurch dieses angeschmolzen wird. Dadurch wird der gesamte Agglomerierprozeß extrem kurz.

Anspruch 4 gibt die Merkmale einer Anlage zur Durchführung des Verfahrens wieder.

Die Unteransprüche enthalten vorteilhafte Ausgestaltungen der Erfindung.

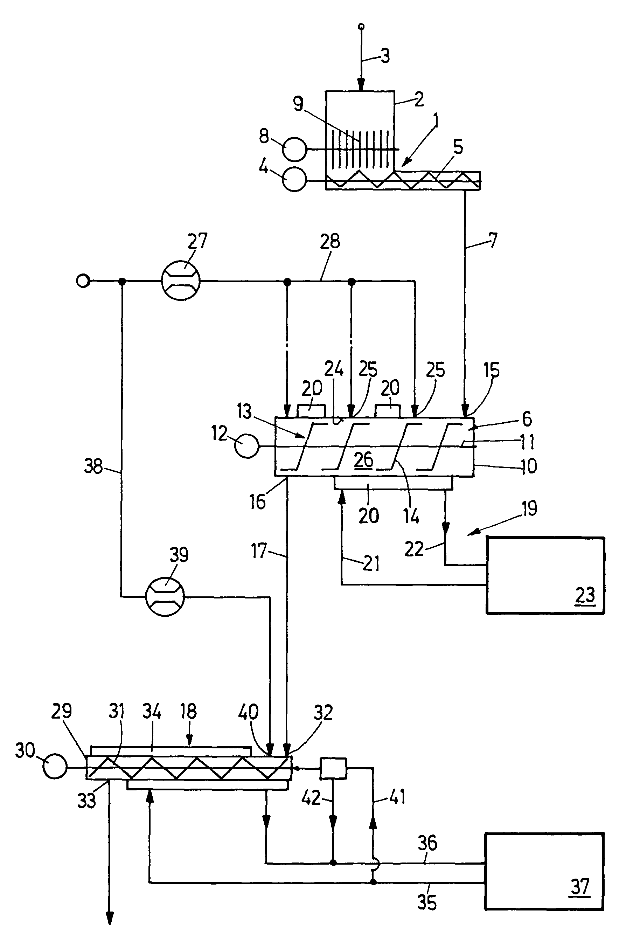

Weitere Merkmale, Vorteile und Einzelheiten der Erfindung ergeben sich aus der nachfolgenden Beschreibung einer schematisch in der Zeichnung dargestellten Anlage zur lösungsmittelfreien Herstellung von mit Harz gebundenen Agglomeraten aus fasrigem und/oder pulverförmigen Feststoff.

Eine gravimetrische Dosiereinrichtung 1 weist einen Vorratstrichter 2 auf, in den über eine Leitung 3 oder dergleichen in einer vorgegebenen Rezeptur vorgemischte Feststoffe zugegeben werden. Dem Vorratstrichter 2 ist eine von einem Motor 4 angetriebene Dosierschnecke 5 nachgeordnet, durch die der rieselfähige pulver- und/oder faserförmige Feststoff in einem vorgegebenen Massenstrom, d. h. in einer vorgegebenen Masse pro Zeiteinheit, in eine zu einem Mischer 6 führende Leitung 7 oder dergleichen abgegeben wird. Zwischen Vorratstrichter 2 und Dosierschnecke 5 ist ein von einem Motor 8 angetriebenes langsam laufendes Rührwerk 9 vorgesehen, um sicherzustellen, daß der Feststoff der Dosierschnecke 5 stets ausreichend zugeführt wird und daß Feststoffgemische sich nicht entmischen.

Der Mischer 6 weist einen zylindrischen Behälter 10 auf, in dem ein um eine waagrechte Achse 11 von einem Motor 12 antreibbares Mischwerk 13 mit Mischwerkzeugen 14 angeordnet ist. Der Behälter 10 weist an einem Ende, nämlich der Einmündung der Leitung 7, einen Feststoff-Einlaß 15 auf. Am anderen Ende ist an der Unterseite des Behälters 10 ein Auslaß 16 vorgesehen, aus dem eine Leitung 17 oder dergleichen zu einer Kühleinrichtung 18 führt.

Der Behälter 10 des Mischers ist mit einer Heizeinrichtung 19 versehen, die aus einem Heizmantel 20 besteht, der wiederum über eine Vorlaufleitung 21 und eine Rücklaufleitung 22 mit einem Heizgerät 23 zum Heizen von Thermoöl oder dergleichen verbunden ist. Mittels dieser Heizeinrichtung 19 kann die Innenwand 24 des Behälters 10 auf über 100 °C aufgeheizt werden. Der Behälter 10 ist weiterhin mit mindestens einer Sprühdüse 25 zum Einsprühen von Wasser in den Innenraum des Behälters 10 versehen. Den Sprühdüsen 25 wird das Wasser mittels einer Dosierpumpe 27 über Zuführleitungen 28 zugeführt.

Der Mischer 6 ist ein kontinuierlich arbeitender Mischer, dessen Mischwerk 13 durch den Motor 12 hochtourig antreibbar ist, so daß der Mischer 6 als sogenannter Ringschicht-Mischer arbeitet, d. h. die einzelnen Feststoffpartikel werden von den Mischwerkzeugen 14 derartig stark beschleunigt, daß sie sich an die Innenwand 24 des Behälters 10 legen und dort in einer Schraubenlinie vom Einlaß 15 zum Auslaß 16 bewegen. Die Gesamtverweilzeit der Feststoffe in dem Behälter 10 beträgt etwa 0,5 bis 3,0 Minuten.

Die Kühleinrichtung 18 ist als sogenannte Kühlschnecke ausgebildet, d. h. in einem Gehäuse 29 ist mindestens ein von einem Motor 30 antreibbare kühlbare Schnecke 31 gelagert, die das zu kühlende Material kontinuierlich von einem an einem Ende befindlichen Einlaß 32 zu einem am anderen Ende befindlichen Auslaß 33 fördert. Das Gehäuse 29 ist mit einem Kühlmantel 34 umgeben, der über eine Vorlaufleitung 35 und eine Rücklaufleitung 36 mit einem Kühlaggregat 37, beispielsweise für Kühlwasser, verbunden ist.

Von der Vorlaufleitung 35 zweigt eine Schnecken-Vorlaufleitung 41 ab, die zur kühlbaren Schnecke 31 führt. Von dieser führt eine Schnecken-Rücklaufleitung 42 zur Rücklaufleitung 36.

Der Mischer 6 und die Kühleinrichtung 18 bilden zusammen mit der Leitung 17 und gegebenenfalls noch der Leitung 7 ein weitgehend geschlossenes System, aus dem Dampf nicht entweichen kann. Falls der gewünschte Wassergehalt der aus dem Mischer austretenden harzgebundenen Feststoff-Agglomerate nicht den gewünschten Wert hat, kann über eine Zuführleitung 38 mittels einer weiteren Dosierpumpe 39 Wasser durch eine Sprühdüse 40 in das Gehäuse 29 eingesprüht werden, wo es mittels der Schnecke 31 noch eingearbeitet wird.

Die Einrichtungen zur Steuerung der verschiedenen Antriebe sind nicht dargestellt.

Die Wirkungsweise ist wie folgt:

Fasern, und zwar beispielsweise Aramid-Fasern, Glasfasern, Mineralfasern, Textilfasern, Buntmetallfasern, Stahlfasern oder dergleichen werden mit mineralischen oder metallischen Füllstoffen versehen. Außerdem wird Bindemittel in Form von Harz in fester Form zugesetzt, das einen Schmelzpunkt unter 100 °C aufweist. Diese Vorbereitung und Aufbereitung der Feststoffe erfolgt in üblicher Weise in einem Chargenmischer mit Messermühlen. Diese aufbereiteten fasrigen und/oder pulverförmigen, bereits mit als Binder dienendem Harz versehenen Feststoffe werden in den Vorratstrichter 2 der Dosiereinrichtung 1 eingegeben und in einem kontinuierlichen Strom dem kontinuierlichen Mischer 6 zugegeben. In diesem Mischer 6 wird der Feststoff einem intensiven Mischprozeß in einem an der Innenwand 24 des Behälters 10 umlaufenden Feststoffring unterworfen, wobei eine vorgegebene Wassermenge kontinuierlich durch die Sprühdüsen 25 zugegeben wird. Die Wassermenge wird bezogen auf die vorgegebene Rezeptur festgelegt. Die Feststoffe werden sehr schnell und intensiv mit dem Wasser vermischt, d. h. sie werden vom Wasser benetzt. Durch das intensive Umwälzen der Feststoffe kommt das Wasser an die auf über 100 °C aufgeheizte Innenwand 24 des Behälters 10 und verdampft dort. Der Dampf wiederum durchdringt die in ständiger Intensiv-Misch-Bewegung befindlichen Feststoffe und überträgt unter gleichzeitiger Kondensation die Verdampfungswärme auf die Feststoffpartikel mit der Konsequenz, daß sehr schnell eine Aufheizung des Feststoff-Harz-Gemisches auf eine Temperatur stattfindet, bei der das Harz angeschmolzen wird. Die angeschmolzenen Harzpartikel bilden mit den fasrigen und/oder pulverförmigen Feststoffen Agglomerate, die durch den Auslaß 16 und die Leitung 17 der Kühleinrichtung 18 zugeführt werden, wo ein Abkühlprozeß stattfindet.

Falls erforderlich, verbleibt das durch die Sprühdüsen 25 zugeführte Wasser zumindest in ganz wesentlichem Umfang in den Agglomeraten als Feuchtigkeit. Dieser Feuchtigkeitsgehalt kann für nachfolgende Verarbeitungsvorgänge notwendig sein. Die geschilderten mit Harz gebundenen Agglomerate werden z. B. zur Herstellung von Reibbelägen für Bremsen, Kupplungen und dergleichen verwendet.

## Patentansprüche

1. Verfahren zur lösungsmittelfreien Herstellung von Agglomeraten aus mittels Harz gebundenem fasrigem und/oder pulverförmigem Feststoff mit folgenden Merkmalen:
- Feststoff und Harz in fester Form in vorgegebener Rezeptur werden kontinuierlich in einem vorgegebenen Massenstrom einem kontinuierli chen Ringschicht- Mischprozeß zugeführt, bei dem Feststoffe und Harz nach außen gegen eine über 100 °C heiße Begrenzung abgestützt werden,
- während des Mischprozesses wird diesem Wasser in vorgegebenem Vo lumen- und/oder Massestrom fein verteilt zugeführt,
- das Wasser wird an der über 100 °C heißen Begrenzung verdampft und an dem Feststoff und dem Harz unter Anschmelzen des Harzes wieder kondensiert,
- Feststoffe und angeschmolzenes Harz werden zu Agglomeraten verbunden,
- die Agglomerate werden gekühlt.

2. Verfahren nach Anspruch 1, wobei das Agglomerieren über eine Zeidauer zirka 0,5 bis 3,0 Minuten durchgeführt wird.

3. Verfahren nach Anspruch 1 oder 2, wobei ein Harz mit einem Schmelzpunkt unter 100 °C eingesetzt wird.

4. Anlage zur Durchführung des Verfahrens nach einem der Ansprüche 1 bis 3,
- mit einer kontinuierlich arbeitenden gravimetrischen Dosiereinrichtung (1) für Feststoff und Harz in fester Form,
- mit einem der Dosiereinrichtung (1) nachgeordneten kontinuierlich arbeitenden Ringschicht-Mischer (6), der
- - einen zylindrischen Behälter (10) mit waagrechter Achse (11),
- - ein in dem Behälter (10) angeordnetes hochtourig drehantreibbares Mischwerk (13),
- - einen Feststoff-Einlaß (15) an einem Ende des Behälters (10),
- - einen Auslaß (16) am anderen Ende des Behälters (10),
- - mindestens eine in den Innenraum (26) gerichtete Wasser-Sprühdüse (25) und
- - eine Heizeinrichtung (19) zum Aufheizen der Innenwand (24) des Behälters (10) über 100 °C
aufweist und
- mit einer dem Mischer (6) nachgeordneten Kühleinrichtung (18).

5. Anlage nach Anspruch 4, wobei der Behälter (10) mit einem Heizmantel (20) versehen ist, der über eine Vorlaufleitung (21) und einer Rücklaufleitung (22) mit einem Flüssigkeits-Heizgerät (23) verbunden ist.

## Claims

1. A method for the solvent-free preparation of agglomerates from resin-bonded, fibrous and/or pulverulent solid matter, comprising the following features:
- solid matter and solid resin of a given recipe are added continuously at a given mass flow rate to a continuous ring-layer mixing process, in which the solids and resin are supported externally against a hot boundary of more than 100°C;
- during the mixing process, water is added finely dispersed at a given volume- and/or mass-flow-rate;
- the water evaporates on the hot boundary of more than 100°C and condenses on the solid matter and the resin, initially melding the resin;
- solid matter and initially molten resin are combined into agglomerates;
- the agglomerates are cooled.

2. A method according to claim 1, wherein the agglomeration takes place for a period of approximately 0.5 to 3.0 minutes.

3. A method according to claim 1 or 2, wherein a resin of a melting point below 100°C is employed.

4. A facility for putting the method according to one of claims 1 to 3 into practice, comprising
- a gravimetric metering device (1) of continuous operation for solid matter and solid resin;
- a ring-layer mixer (6) of continuous operation which is disposed downstream of the metering device (1), comprising
-- a cylindrical container (10) with a horizontal axis (11),
-- a mixing unit (13) drivable for high-speed rotation and disposed in the container (10),
-- a solid-matter inlet (15) at one end of the container (10),
-- an outlet (16) at the other end of the container (10),
-- at least one water spray jet (25) directed into the interior space (26), and
-- a heater (19) for heating the inside wall (24) of the container (10) to more than 100°C; and
a cooler (18) which is disposed downstream of the mixer (6).

5. A facility according to claim 4, wherein the container (10) is provided with a heating jacket (20) which, via a flow pipe (21) and a return pipe (22), is connected to a liquid heater (23).

## Revendications

1. Procédé destiné à la fabrication sans solvant d'agglomérats à partir de matière solide fibreuse et/ou pulvérulente liée au moyen d'une résine, présentant les particularités suivantes :
- de la matière solide et de la résine à l'état solide de formulation prédéterminée sans amenées en continu à un débit massique prédéterminé à un processus de mélange continu à couche annulaire, au cours duquel les matières solides et la résine sont projetées vers l'extérieur contre une délimitation portée à une température de plus de 100 °C,
- pendant le processus de mélange, de l'eau à l'état finement réparti est amenée à celui-ci à un débit volumique et/ou massique prédéterminé,
- l'eau est évaporée au niveau de la délimitation portée à une température de plus de 100 °C, et est à nouveau condensée au niveau de la matière solide et de la résine en provoquant une fusion de la résine,
- des matières solides et de la résine fondue sont liées en agglomérats,
- les agglomérats sont refroidis.

2. Procédé suivant la revendication 1, dans lequel l'agglomération est effectuée pendant une durée de l'ordre 0,5 à 3,0 minutes.

3. Procédé suivant la revendication 1 ou 2, dans lequel il est utilisé une résine d'un point de fusion inférieur à 100 °C.

4. Installation destinée à la mise en oeuvre du procédé selon l'une quelconque des revendications 1 à 3,
- avec un dispositif de dosage gravimétrique (1) fonctionnant en continu pour des matières solides et de la résine à l'état solide,
- avec un mélangeur (6) à couche annulaire fonctionnant en continu disposé en aval du dispositif de dosage (1), comportant
-- une enceinte cylindrique (10) avec un axe horizontal (11),
-- un malaxeur (13) pouvant être entraîné à vitesse élevée, disposé dans l'enceinte (10),
-- une entrée (15) de matières solides au niveau d'une extrémité de l'enceinte (10),
-- une sortie (16) au niveau de l'autre extrémité de l'enceinte (10),
-- au moins une buse de pulvérisation d'eau (25) orientée vers l'espace intérieur (26), et
-- un dispositif de chauffage (19) destiné à porter la paroi intérieure (24) de l'enceinte (10) à une température de plus de 100 °C, et
- avec un dispositif de refroidissement (18) disposé en aval du mélangeur (6).

5. Installation suivant la revendication 4, dans laquelle l'enceinte (10) est munie d'une enveloppe chauffante (20) qui est reliée à un appareil de chauffage à liquide (23) par l'intermédiaire d'une conduite d'aller (21) et d'une conduite de retour (22).
